# EUROPÄISCHE PATENTSCHRIFT

(11) **EP 3 638 568 B1**
(45) Veröffentlichungstag und Bekanntmachung des Hinweises auf die Patenterteilung: **08.12.2021**
(21) Anmeldenummer: 19749621.9
(22) Anmeldetag: 25.07.2019
(51) Int. Cl.: B62D 21/17

(54) **BEHÄLTERANORDNUNG FÜR EIN FAHRZEUG**
CONTAINER ARRANGEMENT FOR A VEHICLE
SYSTÈME DE CONTENANT DESTINÉ À UN VÉHICULE

(30) Priorität: 19.09.2018 DE 102018215948
(43) Veröffentlichungstag der Anmeldung: 22.04.2020
(73) Patentinhaber: Audi AG, 85045 Ingolstadt (DE)
(72) Erfinder: HANISCH, Thomas, 91795 Dollnstein (DE); RUDOLPH, Silke, 91809 Wellheim (DE); BÄR, Carsten, 85049 Ingolstadt (DE)
(86) Internationale Anmeldenummer: PCT/EP2019/069992
(87) Internationale Veröffentlichungsnummer: WO 2019/243638

(56) Entgegenhaltungen:
- EP-A1- 2 555 277
- EP-A1- 2 801 512
- DE-A1- 2 128 318

## Beschreibung

Die Erfindung betrifft eine Behälteranordnung für ein Fahrzeug gemäß der Gattung des Patentanspruchs 1. Des Weiteren betrifft die Erfindung ein Verfahren zur Herstellung einer Karosseriestruktur mit einer solchen Behälteranordnung.

Behälteranordnungen für Fahrzeuge sind in zahlreichen Variationen bekannt. Bei aktuellen Fahrzeugkonzepten werden verschiedene Behälter für die Bevorratung von Flüssigkeiten eingesetzt. So kann beispielsweise Wasser für den Betrieb von Einspritzsystemen oder für die Sensor- und Scheibenreinigung bevorratet werden. Eine andere Anwendung besteht zum Beispiel in der Bevorratung von ammoniakhaltigen Flüssigkeiten für die Abgasnachbehandlung (SCR). Die benötigte Menge je Flüssigkeit liegt im Bereich von einem bis zu 25 Litern. Dafür müssen entsprechende Behälter in den ohnehin begrenzten Bauraum der Fahrzeuge integriert werden. Die Anbringung der Behälter nach derzeitigem Stand führt zu einer Verringerung des durch Kunden nutzbaren Fahrzeugvolumens, wie beispielsweise in einer Fahrgastzelle oder im Kofferraum. Daher ist es vorteilhaft, Behälter in ohnehin vorhandene Karosseriehohlräume zu integrieren.

Die EP 2 555 277 A1 offenbart einen Batterieträger für Elektro- und Hybridfahrzeuge mit einem Rahmen zur lagesicheren Aufnahme und transportsicheren Halterung eines wieder aufladbaren Akkumulators, wobei der Rahmen aus einem Hohlprofil oder mehreren den Rahmen bildenden Hohlprofilabschnitten besteht.

Die EP 2 801 512 A1 offenbart eine Verbundstruktur für eine Fahrzeugkarosserie umfassend: eine Basisstruktur und eine generativ geformte Funktionsstruktur, die mit der Basisstruktur entweder gefügt oder an der Basisstruktur generativ geformt und durch das generative Formen mit der Basisstruktur verbunden ist. Die Funktionsstruktur kann alleine oder gemeinsam mit der Basisstruktur oder einer weiteren Struktur der Fahrzeugkarosserie oder des Anbauteils ein Reservoir für ein Fluid bilden.

Die DE 21 28 318 A1 offenbart einen selbsttragendes Bauelement ausgebildeten Kunststoff-Sandwich-Baukörper, insbesondere eine Fahrzeug-Bodengruppe mit metallischen Einlagen.

Aus der DE 10 2015 012 100 B3 ist beispielweise ein Strukturbauteil für ein Kraftfahrzeug bekannt, welches wenigstens einen durch wenigstens ein Wandungselement des Strukturbauteils zumindest teilweise begrenzten Hohlraum und wenigstens eine Zugangsöffnung zu dem Hohlraum aufweist. Hierbei ist in wenigstens einem Teilbereich des Hohlraums wenigstens ein Hohlraumelement angeordnet, welches einen Druckspeicher bildet. Das Hohlraumelement ist wenigstens bereichsweise an dem Wandungselement abgestützt. Das Hohlraumelement ist durch ein Einspritzen eines Präpolymers in den Hohlraum und dessen anschließendes Vernetzen zu einem Elastomer gebildet.

Dies ist so jedoch für karosserieintegrierte Behälter für Flüssigkeiten nicht umsetzbar, da die Karosseriehohlräume in der Montage nach üblicher Bauweise bedingt durch die konstruktive Situation des Fahrzeuges nicht mehr zugänglich sind. Zudem kann als es nachteilig für die Gesamtstruktur des Fahrzeugs angesehen werden, wenn Serviceöffnungen, Klappen usw. für eine Zugänglichkeit geschaffen werden müssten. Die Behälter können nur beim Erstellen der Karosserie im Karosseriebau eingelegt werden, müssen dann aber auch den gesamten Fertigungsablauf einschließlich Durchlauf durch die Lackiererei (Durchlauf KTL-Bad, Trockneröfen) überstehen können.

Der Erfindung liegt die Aufgabe zu Grunde, eine Behälteranordnung für ein Fahrzeug sowie ein Verfahren zur Herstellung einer Karosseriestruktur mit einer solchen Behälteranordnung bereitzustellen, welche vorhandene Karosseriehohlräume ohne Packageverlust nutzt und deren sichere Funktionalität über die Fahrzeuglebensdauer gegeben ist.

Diese Aufgabe wird durch eine Behälteranordnung für ein Fahrzeug mit den Merkmalen des Patentanspruchs 1 und durch ein Verfahren zur Herstellung einer Karosseriestruktur mit den Merkmalen des Patentanspruchs 8 gelöst.

Vorteilhafte Ausgestaltungen mit zweckmäßigen Weiterbildungen der Erfindung sind in den abhängigen Patentansprüchen angegeben.

Um eine Behälteranordnung für ein Fahrzeug bereitzustellen, welche vorhandene Karosseriehohlräume ohne Packageverlust nutzt und deren sichere Funktionalität über die Fahrzeuglebensdauer gegeben ist, ist mindestens eine mechanische Schnittstelle mit einem behälterseitigen ersten Anschlussstück und einem karosserieseitigen zweiten Anschlussstück vorhanden, welche sowohl zur Befestigung des Behälters an der Karosseriestruktur als auch zur Befüllung und/oder Entleerung des Behälters ausgeführt ist.

Somit umfasst die Behälteranordnung für ein Fahrzeug einen Behälter, welcher in einem abgeschlossenen Hohlraum einer Karosseriestruktur angeordnet ist.

Zudem wird ein Verfahren zur Herstellung einer Karosseriestruktur mit wenigstens einem abgeschlossenen Hohlraum und einer solchen Behälteranordnung vorgeschlagen, welches folgende Schritte umfasst: Vorfertigen der Karosseriestruktur bis zu dem Punkt, wo noch eine Zugänglichkeit des Hohlraums gegeben ist. Einbringen des Behälters in den noch zugänglichen Hohlraum, wobei zwischen einer Hülle des Behälters und einer durch die Karosseriestruktur ausgebildete Wandung des Hohlraums ein durch Temperatureinwirkung expandierbares Material so eingebracht wird, dass zwischen der Hülle des Behälters und der durch die Karosseriestruktur ausgebildete Wandung des Hohlraums ein umlaufend ausgebildeter Spalt verbleibt. Fixieren des Behälters mittels der mechanischen Schnittstelle. Verschließen eventueller Öffnungen des Behälters. Vervollständigen der Karosseriestruktur und Verschließen des Hohlraums. Erhitzen der Karosseriestruktur derart, dass das expandierbare Material, insbesondere bei einem Beschichtungsprozess der Karosseriestruktur, expandiert und den umlaufenden Spalt zumindest bereichsweise ausfüllt und der Behälter dadurch weiter fixiert wird.

In der Karosseriestruktur von Fahrzeugkarossen gibt es konstruktiv bedingt viele abgeschlossene Hohlräume, die ein Flüssigkeitsvolumen beherbergen könnten. Bei Ausführungsformen der erfindungsgemäßen Behälteranordnung wird im Bereich des Karosseriebaus ein formstabiler, endkonturnaher dennoch flexibler Behälter eingebracht. Dieser Behälter wird an einer Schnittstelle mit der Karosseriestruktur fixiert, wobei die Schnittstelle zugleich als Adapter für Befüllung und Entleerung des Behälters im Betrieb dient. Der Behälter kann so aufgebaut werden, dass er beim Trocknerdurchlauf auftretende Temperaturbeanspruchungen und gegebenenfalls Volumenänderung infolge der thermischen Dehnung aushalten kann.

Erfindungsgemäß ist in einem umlaufend ausgebildeten Spalt zwischen einer Hülle des Behälters und einer durch die Karosseriestruktur ausgebildeten Wandung des Hohlraums ein durch Temperatureinwirkung expandierbares Material eingebracht. Der umlaufende Spalt zur Karosseriestruktur vereinfacht in vorteilhafter Weise das Einlegen des Behälters und ermöglicht, dass bei einem Durchlauf der Karosseriestruktur durch ein KTL-Bad (KTL: kathodische Tauchlackierung) eine KTL-Flüssigkeit die Karosseriestruktur umspülen und sich zur Ausbildung eines Korrosionsschutzes absetzen und abschließend auch wieder aus dem Hohlraum ablaufen kann. Durch die Erhitzung des Karosseriebauteils nach dem Durchlaufen des KTL-Bads kann das expandierbare Material expandieren, so dass das durch Temperatureinwirkung expandierte Material den umlaufenden Spalt zwischen der Hülle und der Wandung des Hohlraums zumindest bereichsweise ausfüllt. Dadurch wird der Behälter an mehreren zusätzlichen Stellen an der Karosseriestruktur fixiert. Zudem verhindert oder reduziert das expandierte Material im Fahrbetrieb eine Relativbewegung des Behälters zur umgebenden Karosseriestruktur. Dadurch können auch Scheuerbelastungen zwischen den Oberflächen, insbesondere zwischen Behälter und Blechabsätzen, Durchbrüchen, Überlappungsenden, Schnittgraten der Bleche usw. verhindert oder zumindest reduziert werden, so dass es langfristig zu keiner unzulässigen lokalen Schädigung des Behälters mit Undichtigkeit kommen kann.

In weiterer vorteilhafter Ausgestaltung der Behälteranordnung kann der Behälter eine innere Stützstruktur zur Stabilisierung und/oder zur Unterdrückung von Schwappgeräuschen aufweisen. Dadurch können bei Behältern, welche nicht vollständig mit Flüssigkeit gefüllt sind, im Fahrbetrieb entstehende Schwappgeräusche verhindert oder zumindest reduziert werden, welche vom Kunden als störend wahrgenommen werden können. Hierbei kann die innere Stützstruktur mindesten ein offenzelliges Formschaumteil oder mindestens ein verripptes Spritzgussteil umfassen. Dies ermöglicht eine einfache und kostengünstige Realisierung der stützenden, aber dennoch flexiblen und durchlässigen Stützstruktur, welche im Betrieb des Fahrzeugs Schwappgeräusche verhindert oder zumindest reduziert.

In weiterer vorteilhafter Ausgestaltung der Behälteranordnung kann das erste Anschlussstück als Anschlussplatte ausgeführt werden, welche mindestens einen Fluidkanal und erste Befestigungsmittel aufweisen kann, welche mit zweiten Befestigungsmitteln des zweiten Anschlussstücks zur Befestigung des Behälters an der Karosseriestruktur zusammenwirken können. Die Anschlussplatte kann beispielsweise aus einem metallischen Werkstoff, aber auch aus Kunststoff ausgebildet werden. Hierbei kann die Anschlussplatte beispielsweise einen zylindrischen Schaft mit oder ohne Gewinde aufweisen, so dass die Anschlussplatte mit der Karosseriestruktur verschraubt oder verpresst werden kann. Zudem kann das erste Anschlussstück Mittel zur Zuführung bzw. Abführung von Fluid und/oder elektrische Kontaktmittel zur Kontaktierung einer am ersten Anschlussstück angeordneten Sensorik aufweisen.

In weiterer vorteilhafter Ausgestaltung der Behälteranordnung kann die Hülle des Behälters mehrschichtig aus Naturgummi und/oder Synthesekautschuk aufgebaut werden, welche entsprechend vulkanisiert werden können. Des Weiteren kann das erste Anschlussstück in die Hülle des Behälters einvulkanisiert werden.

In weiterer vorteilhafter Ausgestaltung des Verfahrens zur Herstellung einer Karosseriestruktur kann das expandierbare Material als Schicht zumindest bereichsweise auf eine Außenseite der Hülle und/oder auf eine Innenseite der Wandung des Hohlraums aufgebracht werden. Hierbei kann das expandierbare Material beispielsweise nur auf die Außenseite der Hülle oder auf die Innenseite der Wandung aufgebracht werden. Alternativ kann das expandierbare Material sowohl auf die Außenseite der Hülle als auch auf die Innenseite der Wandung aufgebracht werden.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigen:
- Fig. 1: eine schematische Schnittdarstellung eines Ausführungsbeispiels einer erfindungsgemäßen Behälteranordnung für ein Fahrzeug während der Herstellung einer Karosseriestruktur in einem ersten Zustand vor einer Erhitzung der Karosseriestruktur; und
- Fig. 2: eine schematische Schnittdarstellung der erfindungsgemäßen Behälteranordnung für ein Fahrzeug aus Fig. 1 in einem zweiten Zustand nach der Erhitzung der Karosseriestruktur.

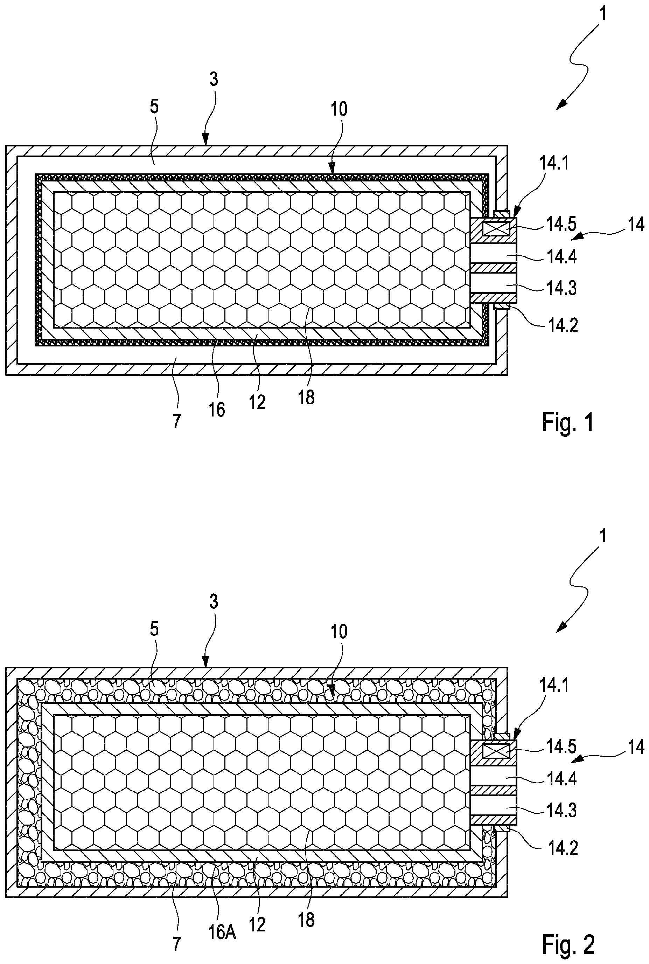

Wie aus Fig. 1 und 2 ersichtlich ist, weist das dargestellte Ausführungsbeispiel einer Behälteranordnung 1 für ein Fahrzeug ein Behälter 10 auf, welcher in einem abgeschlossenen Hohlraum 5 einer Karosseriestruktur 3 angeordnet ist.

Erfindungsgemäß ist mindestens eine mechanische Schnittstelle 14 mit einem behälterseitigen ersten Anschlussstück 14.1 und einem karosserieseitigen zweiten Anschlussstück 14.2 vorhanden, welche sowohl zur Befestigung des Behälters 10 an der Karosseriestruktur 3 als auch zur Befüllung und/oder Entleerung des Behälters 10 ausgeführt ist.

Die Karosseriestruktur 3 besteht vorzugsweise aus metallischen Werkstoffen wie Stahl und/oder Aluminium, vereinzelt ist auch der Einsatz von Kunststoffbauteilen möglich. Als Halbzeuge können beispielsweise Bleche, Profile oder Gussteile vorliegen. In den Bauteilen können Durchbrüche, Löcher, Verprägungen, Sicken usw. vorhanden sein. An den Werkstoffkanten können Schnittgrate vorhanden sein. Um im späteren Prozess die Flutung des Hohlraums 5 mit KTL-Flüssigkeit sowie das Ablaufen zu ermöglichen, sind Lochungen mit einem Durchmesser von ca. 20 mm vorhanden. Die abgeschlossenen Hohlräume 5 in der Karosseriestruktur entstehen durch die Anordnung bzw. Verschachtelung der einzelnen Bauteile der Karosseriestruktur 3. Die Bauteile werden im Karosseriebau nacheinander zusammengesetzt, so dass zu bestimmten Zeitpunkten während der Fertigung die Hohlräume 5 zugänglich sind. Nach Abschluss des Karosseriebaus sind die Hohlräume 5 geschlossen und somit nicht mehr zugänglich.

Der Behälter 10 weist eine vorgefertigte formstabile aber dennoch flexible Hülle 12 auf. Die Hülle 12 des Behälters 10 ist im dargestellten Ausführungsbeispiel mehrschichtig aus Naturgummi und/oder Synthesekautschuk endkonturnah aufgebaut, welche entsprechend vulkanisiert sind. Die Anzahl bzw. Dicke der Lagen, deren Anordnung und deren Werkstoffzusammensetzung sind in Bezug auf Festigkeit und Beständigkeit an die spätere Funktionalität angepasst. Zur mechanischen Unterstützung sind Einlagen, beispielsweise in Form von Drahtgeweben, zwischen den einzelnen Lagen vorstellbar.

Wie aus Fig. 1 und 2 weiter ersichtlich ist, umgibt die Hülle 12 des Behälters 10 eine innere Stützstruktur 18, welche im Behälter 10 verbleibt. Die innere Stützstruktur 18 hat die Aufgabe den Behälter 10 zu stabilisieren und Schwappgeräusche zu verhindern oder zumindest zu unterdrücken. Im dargestellten Ausführungsbeispiel ist die innere Stützstruktur 18 als offenzelliges Formschaumteil ausgebildet, welcher entsprechend auf die Funktions- und Fertigungsbedingungen, wie beispielsweise auf die Wärmebelastung beim Durchlauf durch die Wärmetrockner der Lackiererei, abgestimmt ist. Alternativ kann die innere Stützstruktur 18 auch aus verrippten Spritzgussteilen bestehen, welcher beispielsweise aus glasfaserverstärktem Polyamid hergestellt sind.

Wie aus Fig. 1 weiter ersichtlich ist, ist in einem umlaufend ausgebildeten Spalt 7 zwischen der Hülle 12 des Behälters 10 und einer durch die Karosseriestruktur 3 ausgebildeten Wandung des Hohlraums 5 ein durch Temperatureinwirkung expandierbares Material eingebracht. Wie aus Fig. 1 weiter ersichtlich ist, ist im dargestellten Ausführungsbeispiel das expandierbare Material als Schicht 16 nur auf eine Außenseite der Hülle 12 des Behälters 10 aufgebracht. Der Behälter 10 ist endkonturnah ausgebildet, wobei der zwischen dem Behälter 10 mit der aufgebrachten expandierbaren Schicht 16 und der den Hohlraum 5 begrenzenden Wandung der Karosseriestruktur 3 verbleibende Spalt 7 vorzugsweise eine Breite von 5 bis 10 mm aufweist, um einen Freigang für die Montage des Behälters 10 zur Verfügung zu stellen und im späteren Prozess während der Herstellung der Karosseriestruktur 3 die Flutung des Hohlraums 5 mit KTL-Flüssigkeit sowie das Ablaufen der KTL-Flüssigkeit zu ermöglichen. Lediglich an der mechanischen Schnittstelle 14 berührt der Behälter 10 die Karosseriestruktur 3.

Wie aus Fig. 2 weiter ersichtlich ist, füllt das durch Temperatureinwirkung expandierte Material der expandierten Schicht 16A den umlaufenden Spalt 7 zwischen der Hülle 12 und der Wandung des Hohlraums 5 im dargestellten Ausführungsbeispiel vollständig aus. Bei einem nicht dargestellten Ausführungsbeispiel der Behälteranordnung 1 füllt das durch Temperatureinwirkung expandierte Material der expandierten Schicht 16A den umlaufenden Spalt 7 zwischen der Hülle 12 und der Wandung des Hohlraums 5 nur bereichsweise bzw. abschnittsweise aus. Bei einem weiteren nicht dargestellten Ausführungsbeispiel wird das expandierbare Material als Schicht 16 nur auf eine Innenseite der Wandung des Hohlraums 5 aufgebracht. Alternativ kann das expandierbare Material bei einem weiteren nicht dargestellten Ausführungsbeispiel der Behälteranordnung 1 sowohl auf die Außenseite der Hülle 12 als auch auf die Innenseite der Wandung des Hohlraums 5 aufgebracht werden. Prinzipiell wäre es auch möglich die expandierbare Schicht 16 auf einen zusätzlichen Träger aufzubringen und diese im Hohlraum 5 mit zu befestigen. Als expandierbares Material, welches im Prozessablauf, beispielsweise durch die Wärmeeinwirkung beim Durchlauf durch einen Lacktrockner, an Volumen zunehmen kann, kann vorzugsweise ein blähfähiger Schaum auf Basis von Kautschuk oder Epoxidharz verwendet werden. Dieses Material ist nach dem Aufbringen grifftrocken, jedoch immer noch reaktiv. Selbstverständlich können auch andere geeignete expandierbare Materialien eingesetzt werden.

Wie aus Fig. 1 und 2 weiter ersichtlich ist, ist im dargestellten Ausführungsbeispiel an einer Stelle des Behälters 10 das als Anschlussplatte ausgeführtes erstes Anschlussstück 14.1 integriert. Im dargestellten Ausführungsbeispiel ist das erste Anschlussstück 14.1 in die mehrschichtige Hülle 12 einvulkanisiert. Das als Anschlussplatte ausgeführte erste Anschlussstück 14.1 kann aus einem metallischen Werkstoff und/oder aus Kunststoff bestehen. Das erste Anschlussstück 14.1 umfasst Mittel zur Verbindung des Behälters 10 mit der Karosseriestruktur 3. Zudem umfasst das erste Anschlussstück 14.1 im dargestellten Ausführungsbeispiel einen ersten Fluidkanal 14.3, welcher als Zulauf wirkt und mit einem Zulaufschlauch verbunden werden kann, und einen zweiten Fluidkanal 14.4, welcher als Ablauf wirkt und mit einem Ablaufschlauch verbunden werden kann. Des Weiteren umfasst das erste Anschlussstück 14.1 eine Sensorik 14.5, über welche beispielsweise ein Füllstand im Behälter 10 oder Eigenschaften des eingefüllten Fluids wie beispielsweise Temperatur, Druck usw. ermittelt werden können. An zumindest einer Stelle der den Hohlraum 5 begrenzenden Wandung der Karosseriestruktur 3 ist das zweite Anschlussstück 14.2 als Gegenstück zum ersten Anschlussstück 14.1 mit entsprechenden Öffnungen und Befestigungsmitteln vorhanden. Das erste Anschlussstück 14.1 und das zweite Anschlussstück 14.2 bilden zusammen die mechanische Schnittstelle 14 für die Befestigung des Behälters 10 in der Karosseriestruktur 3 und für das Befüllen und Entleeren des Behälters 10.

Das erfindungsgemäße Verfahren zur Herstellung einer Karosseriestruktur 3 mit wenigstens einem abgeschlossenen Hohlraum 5 und einer solchen oben beschriebenen Behälteranordnung 1 umfasst folgende Schritte: Vorfertigen der Karosseriestruktur 3 bis zu dem Punkt, wo noch eine Zugänglichkeit des Hohlraums 5 gegeben ist. Einbringen des Behälters 1 in den noch zugänglichen Hohlraum 5, wobei zwischen der Hülle 12 des Behälters 10 und der durch die Karosseriestruktur 3 ausgebildete Wandung des Hohlraums 5 ein durch Temperatureinwirkung expandierbares Material so eingebracht wird, dass zwischen der Hülle 12 des Behälters 10 und der durch die Karosseriestruktur 3 ausgebildete Wandung des Hohlraums 5 ein umlaufend ausgebildeten Spalt 7 verbleibt. Fixieren des Behälters 10 mittels der mechanischen Schnittstelle 14 und Verschließen eventueller Öffnungen des Behälters 10, beispielsweise durch Ventile, Kappen usw. Vervollständigen der Karosseriestruktur 3 und Verschließen des Hohlraums 5. Erhitzen der Karosseriestruktur 3 derart, dass das expandierbare Material, insbesondere bei einem Beschichtungsprozess der Karosseriestruktur 3, expandiert und den umlaufenden Spalt 7 zumindest bereichsweise ausfüllt und der Behälter 10 dadurch weiter fixiert wird.

Während des Beschichtungsprozesses durchläuft die gesamte Karosserie Lackiervorgänge inklusive Reinigung, KTL-Fluten, Lackierung und Trocknung. Bei der Materialauswahl für die erfindungsgemäße Behälteranordnung 1 werden verschiedene Prozessgrenzen, wie beispielsweise niedrige Einbrandtemperaturen von bis zu 160°C im Bodenbereich für eine Zeitdauer von ca. 20 Minuten bzw. hohe Einbrandtemperaturen von bis zu 205°C im Dachbereich für eine Zeitdauer von ca. 20 Minuten bei der kathodischen Tauchlackierung (KTL) berücksichtigt. Zudem werden verschiedene Trockner, wie beispielsweise Füllertrockner, Klarlacktrockner mit einer Stillstandszeit von ca. 45 Minuten bei Temperaturen von bis zu 210°C durchlaufen. Infolge der Temperaturerhöhung beim Trocknerdurchlauf steigt der Innendruck im zuvor verschlossenen Behälter 10 um etwa 0,6 bar an. Die entstehende Kraftwirkung nach außen führt zu einem Anpressen des Behälters 10 bzw. der Hülle 12 des Behälters mit der Schicht 16 aus expandierbaren Material an die den Hohlraum 5 begrenzende Wandung der Karosseriestruktur 3. In Einzelfällen können drucksenkende Maßnahmen, wie beispielsweise Überdruckventile oder druckerhöhende Maßnahmen, wie beispielsweise Vorspannen mit Überdruck, vorgenommen werden, wenn es die jeweilige Anwendung erfordert.

Beim erstmaligen Durchlauf durch einen Trockner expandiert das Material und die expandierte Schicht 16A um den Behälter 10 füllt den umlaufenden Spalt 7 zwischen der Hülle 12 und der Wandung des Hohlraums 5 im dargestellten Ausführungsbeispiel vollständig aus. Durch das Anpressen des Behälters 10 an die den Hohlraum 5 begrenzende Wandung der Karosseriestruktur 3 wird die Ausbildung einer guten Adhäsion der expandierten Schicht 16A an die umgebenden Oberflächen begünstigt. Im Montagebereich werden die angebrachten Verschlüsse des Behälters 10 entfernt und entsprechende Schläuche für die Fluidkanäle 14.3, 14.3 und elektrische Kabel für die Sensorik 14.5 angebracht.

### BEZUGSZEICHENLISTE

- 1: Behälteranordnung
- 3: Karosseriestruktur
- 5: Hohlraum
- 7: Spalt
- 10: Behälter
- 12: Hülle
- 14: mechanische Schnittstelle
- 14.1: erstes (karosserieseitiges) Anschlussstück
- 14.2: zweites (behälterseitiges) Anschlussstück
- 14.3: erster Fluidkanal (Zulauf)
- 14.4: zweiter Fluidkanal (Ablauf)
- 14.5: Sensorik
- 16: expandierbare Schicht
- 16A: expandierte Schicht
- 18: Stützstruktur

## Patentansprüche

1. Behälteranordnung (1) für ein Fahrzeug, mit einem Behälter (10), welcher in einem abgeschlossenen Hohlraum (5) einer Karosseriestruktur (3) angeordnet ist, wobei mindestens eine mechanische Schnittstelle (14) mit einem behälterseitigen ersten Anschlussstück (14.1) und einem karosserieseitigen zweiten Anschlussstück (14.2) vorhanden ist, welche sowohl zur Befestigung des Behälters (10) an der Karosseriestruktur (3) als auch zur Befüllung und/oder Entleerung des Behälters (10) ausgeführt ist.
**dadurch gekennzeichnet, dass**
in einem umlaufend ausgebildeten Spalt (7) zwischen einer Hülle (12) des Behälters (10) und einer durch die Karosseriestruktur (3) ausgebildeten Wandung des Hohlraums (5) ein durch Temperatureinwirkung expandierbares Material eingebracht ist.

2. Behälteranordnung (1) nach Anspruch 1,
**dadurch gekennzeichnet, dass**
das durch Temperatureinwirkung expandierte Material den umlaufenden Spalt (7) zwischen der Hülle (12) und der Wandung des Hohlraums (5) zumindest bereichsweise ausfüllt.

3. Behälteranordnung (1) nach einem der Ansprüche 1 oder 2,
**dadurch gekennzeichnet, dass**
der Behälter (10) eine innere Stützstruktur (18) zur Stabilisierung und/oder zur Unterdrückung von Schwappgeräuschen aufweist.

4. Behälteranordnung (1) nach Anspruch 3,
**dadurch gekennzeichnet, dass**
die innere Stützstruktur (18) mindesten ein offenzelliges Formschaumteil oder mindestens ein verripptes Spritzgussteil umfasst.

5. Behälteranordnung (1) nach einem der Ansprüche 1 bis 4,
**dadurch gekennzeichnet, dass**
das erste Anschlussstück (14.1) als Anschlussplatte ausgeführt ist, welche mindestens einen Fluidkanal (14.3, 14.4) und erste Befestigungsmittel aufweist, welche mit zweiten Befestigungsmitteln des zweiten Anschlussstücks (14.2) zur Befestigung des Behälters (10) an der Karosseriestruktur zusammenwirken.

6. Behälteranordnung (1) nach einem der Ansprüche 1 bis 5,
**dadurch gekennzeichnet, dass**
die Hülle (12) des Behälters (10) mehrschichtig aus Naturgummi und/oder Synthesekautschuk aufgebaut ist, welche entsprechend vulkanisiert sind.

7. Behälteranordnung (1) nach Anspruch 5,
**dadurch gekennzeichnet, dass**
das erste Anschlussstück (14.1) in die Hülle (12) des Behälters (10) einvulkanisiert ist.

8. Verfahren zur Herstellung einer Karosseriestruktur (3) mit wenigstens einem abgeschlossenen Hohlraum (5) und einer Behälteranordnung (1) nach einem der Ansprüche 1 bis 7, folgende Schritte umfassend:
Vorfertigen der Karosseriestruktur (3) bis zu dem Punkt, wo noch eine Zugänglichkeit des Hohlraums (5) gegeben ist,
Einbringen des Behälters (1) in den noch zugänglichen Hohlraum (5),
wobei zwischen der Hülle (12) des Behälters (10) und der durch die Karosseriestruktur (3) ausgebildete Wandung des Hohlraums (5) ein durch Temperatureinwirkung expandierbares Material so eingebracht wird,
dass zwischen der Hülle (12) des Behälters (10) und der durch die Karosseriestruktur (3) ausgebildete Wandung des Hohlraums (5) ein umlaufend ausgebildeten Spalt (7) verbleibt,
Fixieren des Behälters (10) mittels der mechanischen Schnittstelle (14),
Verschließen eventueller Öffnungen des Behälters (10),
Vervollständigen der Karosseriestruktur (3) und Verschließen des Hohlraums (5),
Erhitzen der Karosseriestruktur (3) derart, dass das expandierbare Material, insbesondere bei einem Beschichtungsprozess der Karosseriestruktur (3), expandiert und den umlaufenden Spalt (7) zumindest bereichsweise ausfüllt und der Behälter (10) dadurch weiter fixiert wird.

9. Verfahren nach Anspruch 8,
**dadurch gekennzeichnet, dass**
das expandierbare Material als Schicht (16) zumindest bereichsweise auf eine Außenseite der Hülle (12) und/oder auf eine Innenseite der Wandung des Hohlraums (5) aufgebracht wird.

## Claims

1. Container arrangement (1) for a vehicle, having a container (10) which is arranged in a closed-off cavity (5) of a vehicle body structure (3), wherein at least one mechanical interface (14) having a container-side first connecting piece (14.1) and a vehicle body-side second connecting piece (14.2) is present, which is designed both for fastening the container (10) to the vehicle body structure (3) as well as for filling and/or emptying the container (10),
**characterised in that**
in a circumferentially formed gap (7) between a shell (12) of the container (10) and a wall, formed by the vehicle body structure (3), of the cavity (5) is introduced a material which can be expanded by the action of temperature.

2. Container arrangement (1) according to claim 1,
**characterised in that**
the material which is expanded by the action of temperature fills out at least in portions the circumferential gap (7) between the shell (12) and the wall of the cavity (5).

3. Container arrangement (1) according to any of claims 1 or 2,
**characterised in that**
the container (10) has an inner support structure (18) for stabilising and/or suppressing sloshing noises.

4. Container arrangement (1) according to claim 3,
**characterised in that**
the inner support structure (18) comprises at least one open-cell moulded foam part or at least one ribbed injection-moulded part.

5. Container arrangement (1) according to any of claims 1 to 4,
**characterised in that**
the first connecting piece (14.1) is in the form of a connecting plate which has at least one fluid duct (14.3, 14.4) and first fastening means which interact with second fastening means of the second connecting piece (14.2) for fastening the container (10) to the vehicle body structure.

6. Container arrangement (1) according to any of claims 1 to 5,
**characterised in that**
the shell (12) of the container (10) is constructed in a multi-layered manner from natural rubber and/or synthetic rubber, which are appropriately vulcanised.

7. Container arrangement (1) according to claim 5,
**characterised in that**
the first connecting piece (14.1) is vulcanised into the shell (12) of the container (10).

8. Method for producing a vehicle body structure (3) having at least one closed-off cavity (5) and a container arrangement (1) according to any of claims 1 to 7, comprising the following steps:
prefabricating the vehicle body structure (3) up to the point where it is still possible to access the cavity (5),
introducing the container (1) into the still accessible cavity (5), wherein between the shell (12) of the container (10) and the wall, formed by the vehicle body structure (3), of the cavity (5) a material which can be expanded by the action of temperature is introduced such that a circumferentially formed gap (7) remains between the shell (12) of the container (10) and the wall, formed by the vehicle body structure (3), of the cavity (5),
fixing the container (10) by means of the mechanical interface (14),
closing possible openings of the container (10),
completing the vehicle body structure (3) and closing-off the cavity (5),
heating the vehicle body structure (3) such that the expandable material, in particular in a coating procedure of the vehicle body structure (3), is expanded and fills out the circumferential gap (7) at least in portions and is the container (10) is further fixed thereby.

9. Method according to claim 8,
**characterised in that**
the expandable material is applied as a layer (16) at least in portions onto an outer side of the shell (12) and/or onto an inner side of the wall of the cavity (5).

## Revendications

1. Système de contenant (1) pour un véhicule, avec un contenant (10) qui est agencé dans un espace creux (5) fermé d'une structure de carrosserie (3), dans lequel au moins une interface mécanique (14) est présente avec une première pièce de raccordement (14.1) côté contenant et une seconde pièce de raccordement (14.2) côté carrosserie, laquelle est réalisée non seulement pour la fixation du contenant (10) à la structure de carrosserie (3) mais aussi pour le remplissage et/ou le vidage du contenant (10),
**caractérisé en ce que**
un matériau expansible sous l'action de la température est introduit dans une fente réalisée de manière périphérique (7) entre une enveloppe (12) du contenant (10) et une paroi réalisée par la structure de carrosserie (3) de l'espace creux (5).

2. Système de contenant (1) selon la revendication 1,
**caractérisé en ce que**
le matériau expansé sous l'action de la température remplit au moins par endroits la fente (7) périphérique entre l'enveloppe (12) et la paroi de l'espace creux (5).

3. Système de contenant (1) selon l'une quelconque des revendications 1 ou 2,
**caractérisé en ce que**
le contenant (10) présente une structure d'appui (18) intérieure pour la stabilisation et/ou pour la suppression de bruits de clapotis.

4. Système de contenant (1) selon la revendication 3,
**caractérisé en ce que**
la structure d'appui (18) intérieure comporte au moins une pièce en mousse moulée à alvéoles ouvertes ou au moins une pièce moulée par injection nervurée.

5. Système de contenant (1) selon l'une quelconque des revendications 1 à 4,
**caractérisé en ce que**
la première pièce de raccordement (14.1) est réalisée comme plaque de raccordement qui présente au moins un canal de fluide (14.3, 14.4) et des premiers moyens de fixation qui coagissent avec des seconds moyens de fixation de la seconde pièce de raccordement (14.2) pour la fixation du contenant (10) à la structure de carrosserie.

6. Système de contenant (1) selon l'une quelconque des revendications 1 à 5,
**caractérisé en ce que**
l'enveloppe (12) du contenant (10) est constituée de plusieurs couches en caoutchouc naturel et/ou caoutchouc de synthèse qui sont vulcanisés de manière correspondante.

7. Système de contenant (1) selon la revendication 5,
**caractérisé en ce que**
la première pièce de raccordement (14.1) est vulcanisée dans l'enveloppe (12) du contenant (10).

8. Procédé de fabrication d'une structure de carrosserie (3) avec au moins un espace creux (5) fermé et un système de contenant (1) selon l'une quelconque des revendications 1 à 7, comprenant les étapes suivantes :
la préfabrication de la structure de carrosserie (3) jusqu'au point où une accessibilité de l'espace creux (5) est encore donnée,
l'introduction du contenant (1) dans l'espace creux (5) encore accessible, dans lequel un matériau expansible sous l'action de la température est introduit entre l'enveloppe (12) du contenant (10) et la paroi réalisée par la structure de carrosserie (3) de l'espace creux (5) de sorte qu'une fente (7) réalisée de manière périphérique reste entre l'enveloppe (12) du contenant (10) et la paroi réalisée par la structure de carrosserie (3) de l'espace creux (5),
la fixation du contenant (10) au moyen de l'interface mécanique (14),
la fermeture d'éventuelles ouvertures du contenant (10),
l'achèvement de la structure de carrosserie (3) et la fermeture de l'espace creux (5),
le chauffage de la structure de carrosserie (3) de telle manière que le matériau expansible, en particulier pour un processus de revêtement de la structure de revêtement (3) soit expansé, et remplisse au moins par endroits la fente (7) périphérique et le contenant (10) soit ainsi davantage fixé.

9. Procédé selon la revendication 8,
**caractérisé en ce que**
le matériau expansible est appliqué comme couche (16) au moins par endroits sur un côté extérieur de l'enveloppe (12) et/ou sur un côté intérieur de la paroi de l'espace creux (5).
